# EUROPÄISCHE PATENTANMELDUNG

(11) **EP 4 177 231 A1**
(43) Veröffentlichungstag der Anmeldung: **10.05.2023**
(21) Anmeldenummer: 21206186.5
(22) Anmeldetag: 03.11.2021
(51) Int. Cl.: C04B 28/12, C04B 111/28

(54) **WÄRMEDÄMMSYSTEME MIT VERBESSERTER KOSTENEFFIZIENZ**

(71) Anmelder: Evonik Operations GmbH, 45128 Essen (DE)
(72) Erfinder: NUMRICH, Uwe, 64846 Groß-Zimmern (DE); GERHARZ-KALTE, Bettina, 65597 Hünfelden (DE); GRÖGER, Martin, 65201 Wiesbaden (DE); GÄRTNER, Gabriele, 61130 Nidderau (DE); MENZEL, Frank, 63456 Hanau (DE)
(74) Vertreter: Evonik Patent Association

(57) **Zusammenfassung**

Die vorliegende Erfindung betrifft Mischungen für die Herstellung von Wärmedämmputzen oder Wärmedämmmaterialien mit optimierten Eigenschaften sowie deren Einsatz zur Dämmung von Bauwerken und Gebäuden.

## Beschreibung

Die vorliegende Erfindung betrifft Mischungen für die Herstellung von Wärmedämmputzen oder Wärmedämmmaterialien mit optimierten Eigenschaften sowie deren Einsatz zur Dämmung von Bauwerken und Gebäuden.

Während die Wärmedämmung von Gebäuden bis in die 80er Jahre des 20. Jahr-hunderts bei Neubau und Erwerb von Immobilien als nachrangig angesehen wurde, rückt sie aufgrund steigender Energiepreise, eines geschärften Umweltbewusstseins und nicht zuletzt aufgrund gesetzgeberischer Maßnahmen, wie beispielsweise durch das Gebäudeenergiegesetz (GEG), zunehmend in den Fokus. Die Dämmung von Neu- und Altbauten erfolgt dabei überwiegend durch eine sogenannte Außendämmung, d. h. die Außenseiten der Gebäude werden mit Dämmstoffen ausgerüstet. Üblicherweise werden für die Wärmedämmung bevorzugt WärmedämmverbundSysteme (WDVS) eingesetzt, welche aus einem plattenförmigen Dämmmaterial, einer außenseitig darauf angebrachten Armierungsschicht, bestehend aus einem Armierungsmörtel sowie einem Armierungsgewebe und einem Oberputz, aufgebaut sind.

Zur Wärmedämmung werden auch sogenannte Dämmputze eingesetzt, welche ein Bindemittel sowie wärmedämmende Zuschläge enthalten. Derartige Dämmputze sind im Regelfall diffusionsoffen, d. h. Feuchtigkeit aus dem Mauerwerk kann an die Umgebung abgegeben werden, jedoch sind die Dämmwirkung sowie die mechanische Belastbarkeit derartiger Dämmputze gegenüber Wärmedämmverbundsystemen deutlich herabgesetzt, was den Einsatz von Wärmedämmputzen beschränkt.

Darüber hinaus wurden auch Versuche unternommen, Aerogele in Dämmputze einzuarbeiten, wobei sich jedoch speziell die maschinelle Verarbeitbarkeit, insbesondere der Auftrag des Dämmputzes mittels Putzmaschinen, als schwierig herausstellt, da sich die hydrophobierten Aerogel Partikel in der notwendigen Konzentration nur schwierig in entsprechend stabile Formulierungen überführen lassen.

Aerogele sind hochporöse Festkörper, die zu mehr als 90 Vol.-% aus Poren bestehen. Aufgrund der extrem hohen Porosität eignen sich Aerogele zumindest theoretisch in hervorragender Weise zur Wärmedämmung und besitzen Wärmeleitfähigkeitszahlen λ im Bereich von 0,012 bis 0,020 W/(mK). Die üblicherweise für Dämmzwecke eingesetzten Aerogele bestehen aus Siliciumdioxid bzw. kondensierter Kieselsäure und werden durch Sol-Gel-Verfahren aus Silikaten gewonnen. Neben den guten Wärmedämmeigenschaften zeichnen sich Aerogele weiterhin durch eine gute Schallisolierung sowie Nichtbrennbarkeit aus. Aufgrund der guten Wärmedämmeigenschaften von insbesondere hydrophobierten silikatbasierten Aeorgelen sind trotzdem zahlreiche Versuche unternommen worden, Aerogele in Dämmstoffe einzubauen, insbesondere mit dem Ziel einer nachhaltigen Wärmedämmfunktion.

Aerogel basierende Hochleistungsdämmputze benötigen eine hohe Volumenkonzentration an Aerogel Partikeln, um den gewünschten Wärmedämmeffekt zu erreichen. Hierdurch resultieren - aufgrund des vergleichsweise hohen Kostenbeitrags der Aerogel Partikel - hohe Herstellkosten, welche bislang die Anwendungen besagter Dämmputze auf spezialisierte Nischen reduzieren. Des Weiteren ergibt sich aufgrund der notwendigerweise hohen Volumenbeladung mit den wenig duktilen Aerogelpartikeln eine vergleichsweise niedrige Druckfestigkeit des resultierenden Dämmputzes, welche in der Anwendung unerwünscht ist und die Akzeptanz reduziert. Zur Bewerkstelligung einer sachgerechten Druckfestigkeit werden zu Verstärkungszwecken der entsprechenden Aerogel basierenden Dämmputzformulierung Fasern, i.d.R. Glasfasern, zugegeben.

Die beschriebene notwendigerweise hohe Aerogelkonzentration stellt Dämmputzhersteller vor starke Herausforderungen hinsichtlich der Einmischung dessen in entsprechende Dämmputzformulierungen.

Zur Kostenreduzierung werden dem Aerogel basierenden Dämmputz Leichtzuschläge, vorzugsweise kostengünstigere Partikeltypen zugegeben, z.B. expandierte Perlite, auch Blähperlit genannt. Die Einstellung eines hierbei hohen Wärmeisolationsvermögen auf dem Niveau von "reinen" Aerogeldämmputzen ist jedoch trotz mehrfacher Bestrebungen bislang nicht gelungen. So beschreibt WO 2015/090615A1 Putzmörtel zur Herstellung von Dämmputzen auf Basis von Aerogelen und Perliten sowie deren Einsatz in verschiedenen Arten von Wärmeverbundsystemen. Dabei werden jedoch die Aerogel- und Perlit-Partikel ohne Rücksichtnahme auf die jeweilige Partikelgröße und Verteilung und materialwissenschaftlichen Lehren vermischt. Die erreichte Herstellkostenverdünnung ist faktisch wertlos, das Wärmeisolationsvermögen ist weit weg von dem Niveau eines "reinen" Aerogeldämmputzes.

Es besteht somit ein attraktiver Marktbedarf an sowohl in den Kosten als auch hinsichtlich der Formulierungseigenschaften optimierten Dämmputzformulierungen.

Aufgabe der vorliegenden Erfindung ist somit die Bereitstellung von Baustoffformulierungen zur Herstellung von Dämmputzen oder Wärmedämmmaterialien, die das beschriebene komplexe Anforderungsprofil an ein kostengünstiges und effizientes Wärmedämmsystem erfüllen.

Gegenstand der vorliegen Erfindung sind daher Mischungen zur Herstellung von Dämmputzen oder Wärmedämmmaterialien umfassend Aerogel mit einer Partikelgröße von 0,1 - 7,0 mm, mindestens einen Leichtzuschlag, vorzugsweise expandierte Perlite (Blähperlite), mit einer Partikelgröße von 5 bis 500 µm und mindestens ein zementbasiertes Bindemittel.

Überraschenderweise und nicht erwartungsgemäß hat sich im Rahmen der vorliegenden Erfindung herausgestellt, dass gleichzeitig zum einen eine deutliche Kostenreduktion sowie zum Anderen eine Gewährleistung einer sachgerechten Dämmputzformulierungsherstellung durch Verwendung und Zugabe spezieller Leichtzuschläge, vorzugsweise expandierter Perlite (Blähperlitvarianten), mit spezifischer Partikelgröße dargestellt werden kann, mit zudem unverändert hoher Wärmeisolationsleistung eines "reinen" Aerogelputzes.

Die erfindungsgemäßen Formulierungen zeigen somit eine Wärmedämmleistung äquivalent zu einem klassischen Wärmedämmsystem basierend auf Aerogel, allerdings zu deutlich niedrigeren Herstellkosten, aufgrund der vergleichsweise geringeren Aerogel Volumenkonzentration. Zumindest 1/3 der Aerogelmenge eines reinen Aerogeldämmputzes wird erfindungsgemäß ersetzt. Gleichzeitig verbessert die feindisperse Leichtzuschlag-Modifizierung überraschenderweise und nicht erwartungsgemäß das Formulierungsverhalten in durchgreifender Art und Weise und ermöglicht somit eine sachgerechte Herstellung der entsprechenden Dämmputzformulierungen bzw. der Dämmschichten. Wesentlich für den Erfolg der vorliegenden Erfindung ist die gezielte Auswahl der Größen der unterschiedlichen Partikel in den erfindungsgemäßen Formulierungen. Ohne an eine Theorie gebunden zu sein, ist im Rahmen der vorliegenden Erfindung davon auszugehen, dass die grobdispersen Aerogel-Partikel eine Kugelpackung ausbilden, deren Hohlräume (Zwickel) mit den feinteiligen Partikeln der Leichtzuschläge, insbesondere der expandierten Perlite (Blähperlite), gefüllt werden, eingebettet als feindisperse Phase in ein mineralisches Bindemittel (kontinuierliche Phase). Hierdurch resultiert eine Optimierung der Volumenkonzentration an Wärmeisolationsgranulat, welche über diejenige einer kubisch dichtesten Kugelpackung einer reinen grobdispersen Phase aus Aerogel-Partikeln hinausgeht. Es kommt zu einem effektiven Beitrag der Blähperlitphase zu dem Wärmeisolationsvermögen der resultierenden Dämmputzformulierung bzw. den Dämmschichten, da die feindisperse Partikelphase, im Gegensatz zu den Bemühungen des Standes der Technik, sich harmonisch in die Hohlräume (Zwickel) der Aerogel-Kugelpackung einfügt. Der resultierende Hochleistungs-Wärmedämmputz kann aufgrund seiner deutlich reduzierten Herstellkosten und verbesserten Formulierungseigenschaften einer breiteren Anwendungsgruppe, nunmehr über die hochspezialisierte Nische hinausgehend, eingesetzt werden.

Ein wesentlicher Bestandteil der erfindungsgemäßen Mischung zur Herstellung von Dämmputzen sind die Aerogele. Im Rahmen der vorliegenden Erfindung wird es dabei bevorzugt, wenn das Aerogel auf Silikatbasis ausgebildet ist, insbesondere zumindest im Wesentlichen aus Siliciumdioxid besteht, vorzugsweise ein reines, insbesondere ein hydrophobiertes Siliciumdioxid-Aerogel ist.

Geeignete Aerogele sind dem Fachmann bekannt, insbesondere wird im Rahmen der vorliegenden Erfindung auf die Herstellungsmethode wie in WO 2015/014813 beschrieben, referenziert, auf deren Lehre im Rahmen der vorliegenden Erfindung Bezug genommen wird.

Wie vorab ausgeführt, ist die Partikelgröße der in der erfindungsgemäßen Mischung enthaltenen Aerogele ein wesentliches Kriterium. Demgemäß weist das in der Mischung enthaltende Aerogel eine Partikelgröße von 0,1 - 7,0 mm, insbesondere 0,2 - 3 mm, vorzugsweise 0,3 - 1 mm, insbesondere bevorzugt 0,4 - 0,8 mm auf. Ganz besonders bevorzugt weist das in der Mischung enthaltende Aerogel eine Partikelgröße von 0,5 - 0,7 mm auf.

Die Bestimmung der Partikelgröße erfolgt im Rahmen der vorliegenden Erfindung mittels Laserbeugung gemäß ISO 13320.

Das Aerogel ist insbesondere bevorzugt hydrophobiert, was einerseits die wasserabweisenden Eigenschaften des Dämmstoffs positiv beeinflusst, andererseits die Herstellung dessen mit einer notwendigerweise hohen Porosität erst ermöglicht, wie in WO 2015/014813 beschrieben.

Die Hydrophobierung des Aerogels kann mit gängigen Methoden erfolgen, was dem Fachmann jedoch geläufig ist, so dass an dieser Stelle auf weitere Ausführungen verzichtet werden kann. Exemplarisch kann beispielsweise verwiesen werden auf U. K. H. Bangi, A. V. Rao und A. P. Rao "A new route for preparation of sodium-silicate-based hydrophobic silica aerogels via ambientpressure drying", Sei. Technol. Adv. Mater. 9, 2008.

Ein weiterer wesentlicher Bestandteil der erfindungsgemäßen Mischung sind die Leichtzuschläge, insbesondere expandierten Perlite (Blähperlite), mit einer Partikelgröße von 5 bis 200 µm.

Die im Rahmen der vorliegenden Erfindung eingesetzten bzw. verwendeten Leichtzuschläge sind dem Fachmann als solche bekannt. Bei den Leichtzuschlägen handelt es sich um Füllstoffe mit Korngrößen, die für die jeweilige Bindemittelherstellung geeignet sind. Für weitergehende Informationen zu dem Begriff "Zuschlag" kann insbesondere verwiesen werden auf Römpp Chemielexikon, (RÖMPP-Redaktion, Betonzuschlag, RD-02-01140 (2002) in Böckler F., Dill B., Eisenbrand G., Faupel F., Fugmann B., Gamse T., Matissek R., Pohnert G., Rühling A., Schmidt S., Sprenger G., RÖMPP [Online], Stuttgart, Georg Thieme Verlag, [Oktober 2021] https://roempp.thieme.de/lexicon/RD-02-01140) sowie die dort referierte Literatur, deren jeweiliger Inhalt hiermit durch Bezugnahme vollumfänglich eingeschlossen ist. Erfindungsgemäß ist der Leichtzuschlag ausgewählt aus natürlichen oder künstlichen Gesteinen, Metallen oder Gläsern. Im Rahmen der vorliegenden Erfindung hat es sich als vorteilhaft erwiesen, wenn der Leichtzuschlag ausgewählt ist aus der Gruppe von vulkanischem Gestein, expandierter Perlit, Vermiculit, Bims, Schaum- und Blähglas, Blähton, Blähschiefer, Styropor, Tuff, Blähglimmer, Lavakies, Lavasand, Aerogelgranulat, Schaumkunststoffen und deren Mischungen, vorzugsweise expandierter Perlit.

Unter dem technischen Begriff Perlit fasst man alle glashaltigen vulkanischen Gesteine zusammen, die gebundenes Wasser enthalten und sich im pyroplastischen Zustand auf ein Vielfaches ihres Volumens aufblähen (siehe Amelingmeier E, Perlite, RD-16-01090 (2010) in Böckler F., Dill B., Eisenbrand G., Faupel F., Fugmann B., Gamse T., Matissek R., Pohnert G., Rühling A., Schmidt S., Sprenger G., RÖMPP [Online], Stuttgart, Georg Thieme Verlag, [September 2021], https://roempp.thieme.de/lexicon/RD-16-01090). Erhitzt man Perlite bei Atmosphärendruck auf Temperaturen zwischen 900 und 1150°C, so expandieren sie unter gleichzeitigem Erweichen und Aufblähen und Abgabe des chemisch gebundenen Wassergehaltes zu einem federleichten Bimsstein-ähnlichen weißen "Gesteinsschaum" vom 10-20fachen Volumen, dem sogenannten Blähperlit (expandierter Perlit, engl: expanded perlite) mit Schüttdichten zwischen ca. 30 und 640 kg/m3 (= g/L) je nach Verwendungsbereich. In der Regel weisen die expandierten Perlite geschlossenzellige Strukturen auf.

Im Rahmen der vorliegenden Erfindung werden insbesondere expandierte Perlite (Blähperlite) mit einer Partikelgröße von 5 bis 500 µm, vorzugsweise 5 bis 300 µm, bevorzugt 10 bis 300 µm, insbesondere bevorzugt 5 bis 220 µm, besonders bevorzugt 10 bis 220 µm und ganz besonders bevorzugt 15 bis 220 µm eingesetzt. Die Bestimmung der Partikelgröße erfolgt im Rahmen der vorliegenden Erfindung durch Laserbeugung gemäß ISO 13320.

Die erfindungsgemäß eingesetzten expandierten Perlite können unbeschichtet oder hydrophob beschichtet, beispielsweise mit Silanen, Siloxanen, Siliconharzen, Siliconaten oder Silan-Siloxan-Gemischen, sein. Beide Arten von expandierten Perliten lassen sich gleichermaßen gut in Mischungen der vorliegenden Erfindung einsetzen und erlauben ein gutes Einarbeitungsverhalten der erfindungsgemäßen Mischung bei der Herstellung der Dämmputze. Vorzugsweise werden hydrophobierte Arten der expandierten Perlite eingesetzt.

Geeignete expandierte Perlite sind dem Fachmann allgemein zugänglich, beispielsweise unter der Bezeichnung SilCell^{®} der Fa. Silbrico.

In der erfindungsgemäßen Mischung ist weiterhin ein zementbasiertes Bindemittel enthalten. Insbesondere handelt es sich bei dem zementbasierten Bindemittel um Portlandzement. Portlandzement (Abkürzung CEM I, früher PZ) ist dem Fachmann hinlänglich bekannt und ist eine Zement-Sorte, die aus einem feingemahlenen Gemisch von Portlandzement-Klinker und Calciumsulfaten (Gips oder Anhydrit) besteht (Quelle:Geldsetzer F, Portlandzement, RD-16-03781 (2006) in Böckler F., Dill B., Eisenbrand G., Faupel F., Fugmann B., Gamse T., Matissek R., Pohnert G., Rühling A., Schmidt S., Sprenger G., RÖMPP [Online], Stuttgart, Georg Thieme Verlag, [September 2021] https://roempp.thieme.de/lexicon/RD-16-03781). Zur Herstellung von Portlandzementklinker vermischt man kalk- und tonhaltige Rohstoffe (Kalkstein, Ton, Kalkmergel und Tonmergel) derart miteinander, dass das Rohstoffgemisch neben Siliciumdioxid (SiO2), Aluminiumoxid (Al2O3) und Eisen(III)-oxid (Fe2O3) aus dem Tonanteil zwischen 75 und 79 Gewichts-% Calciumcarbonat (CaCO3) enthält. Das Gemisch wird, wie allgemein Zement, im Drehrohrofen gebrannt. Bei der Weiterverarbeitung zu Portlandzement werden Klinker und Gips oder Anhydrit gemeinsam gemahlen, bis das Pulver eine spezifische Oberfläche von ca. 2000 bis 6000 cm2/g aufweist. Die chemische Zusammensetzung des Portlandzementes beträgt üblicherweise: 60-69 Gew.-% Calciumoxid (CaO), 18-24Gew.-% Siliciumdioxid, 4-8 Gew.-% Aluminiumoxid und Titandioxid (TiO2), 1-8 Gew.-% Eisen(III)-oxid, <5,0 Gew.-% Magnesiumoxid (MgO), <2,0 Gew.-% Kaliumoxid (K2O) und Natriumoxid (Na2O), <3,0 Gew.-% Schwefeltrioxid (SO3).

Entsprechende Portlandzemente sind dem Fachmann hinlänglich bekannt und stehen im industriellen Maßstab, z. B. unter der Markenbezeichnung Milke^{®} der Fa. Heidelbergcement, zur Verfügung.

In einer bevorzugten Ausführungsform weist die erfindungsgemäße Mischung mindestens ein weiteres Bindemittel auf, das von dem zementbasierten Bindemittel verschieden ist. Ganz besonders bevorzugt weist die erfindungsgemäße Mischung zwei unterschiedliche Bindemittel auf. Hierbei werden besonders gute Ergebnisse erzielt, wenn die Mischung ein kalkbasiertes Bindemittel und ein zementbasiertes Bindemittel aufweist.

Bei dem kalkbasierten Bindemittel kann es sich insbesondere um Kalkhydrat, Kalksteinmehl oder hydraulischen Kalk handeln. Unter einem hydraulischen Kalk wird dabei im Rahmen der vorliegenden Erfindung eine Mischung aus gebranntem Kalk (Calciumhydroxid) mit Hydraulefaktoren, wie beispielsweise Calciumsilikaten und Calciumaluminaten oder auch Eisenoxid, verstanden. Der hydraulische Anteil des Bindemittels härtet durch Hydratation und benötigt kein Kohlendioxid zum Abbinden. Hierdurch erhält das Bindemittel eine hohe Anfangsfestigkeit, während der nicht hydraulische Teil des Kalks langsam durch Diffusion von Kohlendioxid im Dämmputz aushärtet bzw. abbindet.

Gemäß einer besonderes bevorzugten Ausführungsform der vorliegenden Erfindung enthält die Mischung ein kalkbasiertes Bindemittel und zumindest ein zementbasiertes Bindemittel.

Mischungen der vorgenannten Bindemittel weisen ein besonders gutes Abbindeverhalten auf, besitzen eine Konsistenz und Viskosität, welche eine gute Auftragbarkeit des damit herzustellenden Dämmputzes gewährleisten und führen trotz des Anteils an Zuschlagstoffen zu einer hervorragenden Verarbeitbarkeit. Darüber hinaus hemmt die Anwesenheit eines kalkhaltigen Bindemittels durch seine hohe Alkalität zusätzlich die Bildung von Schimmel und Algen. Der erfindungsgemäße Dämmputz, welcher mit der erfindungsgemäßen Mischung erhältlich ist, ist zwar diffusionsoffen, so dass einer Schimmelbildung von vornherein entgegengewirkt wird, die Verwendung eines kalkbasierten Bindemittels unterdrückt jedoch auch die Bildung von Schimmel und Algen für den Fall, dass das Dämmputzsystem unter ungünstigen Bedingungen aufgetragen wird.

Weiterhin kann es im Rahmen der vorliegenden Erfindung vorgesehen sein, dass die Mischung zusätzlich mindestens ein oder mehrere Additiv(e) enthält. Insbesondere kann das mindestens eine Additiv ausgewählt sein aus der Gruppe von Verflüssigern, Verdickern, Verzögerern, Beschleunigern, Stabilisierungsmitteln (Stabilisatoren), Rheologiehilfsmitteln, Zusatzmitteln zur Einstellung des Wasserrückhaltevermögens (Wasserretentionsmitteln), Dispergiermitteln, Dichtungsmitteln, Luftporenbildnern sowie deren Mischungen.

Die genannten Bestandteile der erfindungsgemäßen Mischungen lassen sich auf einfache Weise miteinander mischen. Enthalten die Mischungen lediglich die Aerogele, die expandierten Perlite sowie das zementbasierte Bindemittel, so können diese Bestandteile auf alle dem Fachmann bekannten Arten zur Herstellung von Trockenmischungen vermischt werden.

Wenn in die erfindungsgemäßen Mischungen darüber hinaus auch Additive eingebracht werden sollen, kann deren Zugabe vorab oder während der Herstellung des Dämmputzes unter Zugabe von Wasser erfolgen.

Die erfindungsgemäßen Mischungen werden aus den vorab beschriebenen Komponenten durch Mischen hergestellt. Das Mischen kann durch alle dem Fachmann für die Herstellung derartiger Mischungen bekannten Arten erfolgen. In der einfachsten Ausführungsform werden alle Bestandteile der erfindungsgemäßen Mischungen trocken eingewogen und homogenisiert.

Im Allgemeinen enthält die erfindungsgemäße Mischung das Aerogel in Mengen von 10 bis 70 Gew.-%, insbesondere 15 bis 50 Gew.-% und ganz besonders bevorzugt 20 bis 40 Gew.-%, bezogen auf die Mischung. Insbesondere in den zuvor genannten Mengenbereichen werden besonders stabile und haltbare Dämmputze erhalten.

Der Anteil der expandierten Perlite (Blähperlite) in der erfindungsgemäßen Mischung beträgt 2 bis 70 Gew.-%, insbesondere 5 bis 50 Gew.-% und ganz besonders bevorzugt 10 bis 30 Gew.- %, bezogen auf die Mischung.

Erfindungsgemäß enthält die Mischung mindestens ein zementbasiertes Bindemittel. Insbesondere werden gute Ergebnisse erhalten, wenn die Mischung das zementbasierte Bindemittel in Mengen von 5 bis 98 Gew.-%, insbesondere 8 bis 75 Gew.-%, vorzugsweise 10 bis 50 Gew.-%, bevorzugt 12 bis 40 Gew.-%, besonders bevorzugt 15 bis 35 Gew.-%, bezogen auf die Mischung enthält.

Wenn die erfindungsgemäße Mischung ein kalkbasiertes Bindemittel enthält, so hat es sich bewährt, wenn die Mischung das kalkbasierte Bindemittel in Mengen von 1 bis 30 Gew.-% enthält, insbesondere 2 bis 20 Gew.-%, und ganz besonders bevorzugt 5 bis 15 Gew.-%, bezogen auf die Mischung.

Was die Menge an Additiv in der erfindungsgemäßen Mischung anbelangt, so kann diese in weiten Bereichen variieren. Gute Ergebnisse werden im Rahmen der vorliegenden Erfindung jedoch insbesondere dann erhalten, wenn die Mischung entsprechende Additive in Mengen von 0,01 bis 10 Gew.-%, insbesondere 0,1 bis 5 Gew.-%, vorzugsweise 0,3 bis 3 Gew.-%, und ganz besonders bevorzugt 0,5 bis 2 Gew.-%, bezogen auf die Mischung, enthält.

Ganz besonders bevorzugt weist die erfindungsgemäße Mischung folgende Zusammensetzung auf, wobei die Summe der Anteile 100 Gew.-% ergeben muss:

| | |
|---|---|
| Aerogel: | 20 - 40 Gew.-% |
| Expandierter Perlit: | 10 - 30 Gew.-% |
| Zementbasiertes Bindemittel: | 15 - 35 Gew.-% |
| Kalkbasiertes Bindemittel: | 5 - 15 Gew.-% |
| Additive: | 0,5 - 2 Gew.-% |

Die erfindungsgemäßen Mischungen haben den Vorteil, dass sie gut prozessierbar sind, eine besonders gute Dämmqualität von < 45 mW/mK (10°C) aufweisen, genauer < 42 mW/mK (10°C), und damit auf dem gleichen Niveau wie ein reiner Aerogel-Dämmputz sind, und darüber hinaus durch in der Regel um zumindest 30 % verringerte Rohstoffkosten ökonomisch vorteilhaft sind. Die gute Prozessierbarkeit der erfindungsgemäßen Mischungen bedeutet, dass man die Mischung mit Wasser anmischen kann, was alleine mit Aerogel oder hydrophober expandierter Perlite nicht gelingt. Das Anmischen der Mischung mit Wasser ist jedoch für eine kommerzialisierte Verarbeitung wichtig, da es dem Stand der Technik auf der Baustelle entspricht.

Dementsprechend kann die erfindungsgemäße Mischung wie gängige, aerogelfreie Putzsysteme durch einfaches Anmachen, d.h. Mischen, mit Wasser zu einem Dämmputz verarbeitet werden, welcher sich maschinell auf Gebäudewände aufbringen lässt. Darüber hinaus ist der erfindungsgemäße Dämmputz diffusionsoffen, d. h. Feuchtigkeit aus dem Mauerwerk kann an die Umgebung abgegeben werden, wodurch der geringere Wärmedurchgangskoeffizient eines trockenen, gegenüber einem durchfeuchteten, Bauteils erreicht wird.

Ein weiterer Gegenstand der vorliegenden Erfindung ist die Verwendung einer Mischung, insbesondere einer Trockenmörtelmischung wie zuvor beschrieben, zur Herstellung eines Dämmputzes, insbesondere eines Wärmedämmputzes, oder von Wärmedämmmaterialien zur Wärmedämmung von Bauwerken, insbesondere von Gebäuden.

Demgemäß ist ein weiterer Gegenstand der vorliegenden Erfindung ein Dämmputz, insbesondere ein Wärmedämmputz, oder ein Wärmedämmmaterial zur Wärmedämmung von Bauwerken bzw. Gebäuden, welche aus einer zuvor beschriebenen Mischung erhalten wurden.

Ein wichtiges Anwendungsgebiet der Mischungen gemäß der vorliegenden Erfindung ist die Herstellung von Dämmputzen. Hierbei kann es insbesondere vorgesehen sein, dass im Falle von Dämmputzen diese durch Anmachen mit Wasser einer zuvor beschriebenen Mischung erhältlich sind. Abhängig von der Zusammensetzung der Trockenmörtelmischung, besonders der Menge & Art der eingesetzten mineralischen Bindemittel, resultiert die notwendige Menge an Wasser zur Herstellung der Dämmputzformulierung. So kann das Mischen der Trockenmörtelmischung mit Wasser gemäß EN 196-1/Teil 6.2 "Mischen des Mörtels" erfolgen.

Der erfindungsgemäße Dämmputz kann demgemäß wie ein herkömmlicher, aus dem Stand der Technik bekannter Dämmputz angemacht und auch verarbeitet werden.

Üblicherweise besitzt der ausgehärtete Dämmputz bereits ohne weitere Beschichtung eine hervorragende Barrierewirkung gegenüber flüssigem Wasser, wohingegen Wasserdampf relativ problemlos durch den ausgehärteten Dämmputz hindurch diffundieren kann.

Im Allgemeinen wird der Dämmputz mittels gängiger Methoden auf die zu behandelnde Oberfläche aufgebracht, insbesondere mittels maschineller Spritzverfahren. Es ist eine Besonderheit des erfindungsgemäßen Dämmputzes, dass er trotz seines hohen Gehalts an Aerogel mittels maschineller Spritzverfahren, insbesondere mittels Putzmaschinen, auf die zu dämmende Oberfläche, insbesondere Hauswand, aufgebracht werden kann. Wie bereits im Zusammenhang mit der erfindungsgemäßen Mischung ausgeführt, zeichnet sich der erfindungsgemäße Dämmputz dadurch aus, dass das in ihm enthaltene Aerogel unter Auftragsbedingungen, insbesondere bei maschineller Auftragung stabil bleibt.

Der ausgehärtete Dämmputz weist bei einer Temperatur von 23°C eine Wärmeleitfähigkeit im Bereich von 20 bis 55 mW/(mK), insbesondere 22 bis 50 mW/(mK), vorzugsweise 0,024 bis 0,045 mW/(mK) auf.

Wie zuvor bereits erwähnt, zeichnet sich der erfindungsgemäße Dämmputz dadurch aus, dass er diffusionsoffen ist und Feuchtigkeit vom Mauerwerk an die Umgebung abgegeben werden kann, was der Bildung von Schimmel und Algen entgegenwirkt und darüber hinaus die Haltbarkeit des Wärmedämmsystems erhöht.

Was die Schichtdicke anbelangt, mit welcher der Dämmputz auf eine Fläche, insbesondere auf eine Gebäudewand, aufgetragen wird, so kann diese in weiten Be- reichen variieren. Besonders gute Ergebnisse werden jedoch im Rahmen der vorliegenden Erfindung erzielt, wenn der ausgehärtete Dämmputz mit einer Schichtdicke von 1 bis 14 cm, insbesondere 1 bis 10 cm, vorzugsweise 1 bis 8 cm, bevorzugt 2 bis 7 cm, besonders bevorzugt 3 bis 6 cm, auf die zu dämmende Fläche, insbesondere die Innen- oder Außenfläche einer Gebäudewand, aufgebracht ist. Dabei wird es weiterhin bevorzugt, wenn der ausgehärtete Dämmputz auf die Außenfläche einer Gebäudewand aufgebracht ist, d. h. als Außendämmung eingesetzt wird. Der Auftrag des erfindungsgemäßen Wärmedämmputzes kann dabei insbesondere direkt auf das Mauerwerk erfolgen, oder das Mauerwerk kann vorher spezifisch vorbereitet worden sein, beispielsweise durch Aufbringung einer Grundierung. Grundierungen, welche das Mauerwerk verfestigen bzw. eine verbesserte Haftung des Putzes am Mauerwerk bewirken, oder ein Armierungsmörtel bzw. der Einsatz von Armierungs-Geweben, sind dem Fachmann ohne Weiteres bekannt, so dass an dieser Stelle auf weitere Ausführungen verzichtet werden kann.

Was die Schichtdicke des ausgehärteten Dämmputzes weiterhin anbelangt, so gelten die oben genannten Wertebereiche nur für eine alleinige Auftragung des erfindungsgemäßen Dämmputzes bzw. eines Dämmputzsystems, welches den erfindungsgemäßen Dämmputz enthält, wohingegen bei der Verwendung des erfindungsgemäßen Dämmputzes in einem Wärmedämmverbundsystem (WDVS), insbesondere in einem eine Wärmedämmplatte aufweisenden Wärmedämmverbundsystem (WDVS), deutlich geringere Schichtdicken des erfindungsgemäßen Dämmputzes eingesetzt werden können.

Es ist eine Besonderheit des erfindungsgemäßen Dämmputzes, dass er aufgrund seiner Diffusionsoffenheit gegenüber Wasserdampf sowohl für den Innen- als auch für den Außenbereich angewendet werden kann. Der Auftrag des erfindungsgemäßen Wärmedämmputzes bzw. eines korrespondierenden Dämmputzsystems empfiehlt sich beispielsweise dann, wenn die Konturen eines Gebäudes detailgetreu nachgezeichnet werden sollen.

Gegenstand der vorliegenden Erfindung ist auch ein mehrschichtiges Dämmputzsystem, welches mindestens eine Dämmputzschicht, bestehend aus einem die erfindungsgemäße Mischung enthaltenden Dämmputz und einer Oberflächenbeschichtung aufweist, wobei die Oberflächenbeschichtung auf der von der mit dem Dämmputz versehenen Fläche abgewandten Seite, insbesondere einer Gebäudewand, angeordnet ist. Hierbei wird es bevorzugt, wenn die Oberflächenbeschichtung die Dämmputzschicht zumindest im Wesentlichen bedeckt.

Der Auftragung der Oberflächenbeschichtung kann dabei durchgängig oder nur bereichsweise erfolgen, wobei eine durchgängige Oberflächenbeschichtung insbesondere an der Außenseite des Dämmputzsystems, d. h. an der zu dämmenden Fläche abgewandten Seite des Dämmputzsystems, bevorzugt wird.

Im Allgemeinen ist die Oberflächenbeschichtung wasserdicht, insbesondere schlagregendicht, und/oder diffusionsoffen. Erfindungsgemäß bevorzugt eingesetzte Oberflächenbeschichtungen verhindern somit das Eindringen von flüssigem Wasser in das Dämmputzsystem, ermöglichen jedoch andererseits die Diffusion von Wasserdampf aus dem Mauerwerk in die Umgebung, wodurch das Mauerwerk bei entsprechendem Dampfdruckgefälle entfeuchtet wird.

Weiterhin kann es im Rahmen der vorliegenden Erfindung vorgesehen sein, dass zwischen der erfindungsgemäßen Dämmputzschicht und der Oberflächen-beschichtung mindestens eine Grundierungsschicht angeordnet ist. Die Grundierungsschicht kann gleichfalls aus einer oder mehreren Lagen bestehen. Als Grundierung eignen sich prinzipiell sämtliche Grundierungen, welche eine verbesserte Haftung der Oberflächenbeschichtung an dem zu beschichtenden Material gewährleisten und darüber hinaus das überwiegend mineralbasierte Putzsystem verfestigen. Dem Fachmann sind derartige Grundierungssysteme bekannt und geläufig. Es ist allerdings bevorzugt, wenn die verwendete Grundierung gleichfalls diffusionsoffen ist, d. h. einer Entfeuchtung des Mauerwerks nicht entgegensteht.

In einer weiteren Ausführungsform der vorliegenden Erfindung werden die erfindungsgemäßen Mischungen zur Herstellung von Wärmedämmmaterialien eingesetzt. Bei den Wärmedämmmaterialien kann es sich beispielsweise um Dämmplatten aber auch um Betonthermowände handeln.

Bei den Dämmplatten kann es sich um alle dem Fachmann bekannten Arten von Dämmplatten handeln, abhängig von Art und Ort der Anwendung. Die Dämmplatten können allein oder als Teil eines Wärmedämmverbundsystems (WDVS) eingesetzt werden.

Betonthermowände sind ebenfalls dem Fachmann hinlänglich bekannt. In der Regel basieren entsprechende Betonthermowände auf Doppelwänden mit integrierter Dämmung. In die Außen-und Innenschale aus Beton ist die Bewehrung nach statischen Anforderungen vollständig integriert. Durch die Verfüllung vorhandener Hohlräume mit Ortbeton wird die Wand zu einem monolithischen Bauteil. Im Ergebnis liegt die Dämmung auf Basis der erfindungsgemäßen Mischung eingebettet zwischen den Betonschalen.

Wärmedämmverbundsysteme (WDVS) enthaltend die erfindungsgemäßen Wärmedämmmaterialien sind somit ebenfalls Gegenstand der vorliegenden Erfindung. In der Regel handelt es sich bei den entsprechenden Wärmedämmverbundsystemen um ein bauseits angebrachtes System, welches mindestens die folgenden Komponenten umfasst:
- eine/einen systemspezifische(n) Klebemasse/Klebemörtel und systemspezifische mechanische Befestigungsmittel;
- einen systemspezifischen Wärmedämmstoff;
- einen systemspezifischen Unterputz aus einer oder mehreren Schichten, von denen mindestens eine Schicht eine Armierung enthält;
- eine systemspezifische Armierung;
- einen systemspezifischen Oberputz oder eine systemspezifische Schlussbeschichtung, die auch eine dekorative Schicht einschließen kann.

Alle Komponenten eines WDVS werden üblicherweise durch den Systemhersteller speziell für das entsprechende System und den Untergrund ausgewählt.

In der vorliegenden Erfindung sind die erfindungsgemäßen Mischungen Teil des Wärmedämmstoffs bzw. bilden diesen aus.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

Im Rahmen der vorliegenden Erfindung wurden folgende Messmethoden angewendet:
Bestimmung der Wärmeleitfähigkeit:
Die Bestimmung der Wärmeleitfähigkeit erfolgt nach DIN EN 12667; Abschnitt 5.2.3 mittels eines Einplattenmessgeräts.

### 1. Herstellung der Aerogele:

Die eingesetzte Pilotanlage bestand aus einem Rührchargenreaktor zur Herstellung des Sols und einem Rohrbündelreaktor mit oben und unten hermetisch verschlossenen Deckeln sowie einem nachgeschalteten und zusätzlich beheizten Hydrophobisierungsreaktorbehälter, einer Phasentrenneinheit und einer hybriden Konvektions-/Trocknerkontakteinheit. Die Geräteperipherie bestand aus den entsprechenden Hilfseinheiten (Heizung, Wärmetauscher, Kondensator) und Lösungsmittelbehältern sowie Speichern für die verschiedenen Reagenzien. Der Rohrbündelreaktor bestand aus einem Wärmetauscher aus parallelen Rohren mit einem Innendurchmesser von jeweils 23 mm und einem Mantel, der mit einem Wärmeträgerflüssigkeitsmedium gespült werden konnte. Der Reaktor wurde in einem festen Winkel von 19° zur Horizontalen auf den Boden des Fabrikgeländes montiert.

Zu Beginn wurden 76 I eines Sols bestehend aus 30 kg Ethanol, 30 kg Solkonzentrat, 4,3 kg Wasser und 25,8 kg HMDSO durch Verdünnen eines PEDS-Solkonzentrats mit Ethanol und HMDSO in einem Rührreaktor hergestellt und auf 45°C vorgewärmt. Anschließend wurde verdünnte ethanolische Ammoniaklösung zugegeben und das so aktivierte Sol über eine Transferleitung mit Druckausgleich in den auf 60°C vorgewärmten Rohrbündelreaktor übertragen, beide Deckel verschlossen. Nach der Übergabe des Sols wurden auch die oberen und unteren Ventile in den Reaktor geschlossen, wodurch die Wärmetauscherrohre zusammen mit den gebildeten Gelstäben in einem dicht verschlossenen Reaktor isoliert wurden.

Die Temperatur des Reaktors wurde dann durch Erhitzen des Wärmetauschermediums auf 112°C angehoben. Der Druck stieg schnell auf einen Wert von 2,5 bar. Nach einer Alterungszeit von 60 Minuten wurden das untere und obere Ventil vorsichtig geöffnet und die aus dem Gel austretende Flüssigkeit in das Freisetzungsgefäß freigesetzt. Die Erwärmung des Rohrbündelwärmetauschers wurde nun auf 102° C reduziert. Nun wurden 18,5 I einer verdünnten Schwefelsäurelösung in Ethanol, die im Inneren des gerührten Chargenreaktors gemischt und auf 60°C vorgewärmt worden war, in den Reaktor gepumpt und mit einem konstanten Durchfluss von 4 l/min umgewälzt. Der Hydrophobierungskatalysator wurde dann für weitere 75 Minuten bei gleicher Temperatur gepumpt.

Nach Abschluss der Hydrophobierung wurde der Reaktor schnell auf eine Temperatur von 73°C abgekühlt und auf Umgebungsdruck entlüftet. Der Reaktorbodendeckel wurde geöffnet und die resultierenden hydrophobierten Gelstäbe wurden durch die Phasentrenneinheit von der flüssigen Phase getrennt und in die Trocknereinheit überführt, wo die Gele unter einem Stickstoffstrom bei 160°C auf konstantes Gewicht getrocknet wurden. Nach der Trocknungseinheit wurde das Aerogelgranulat durch einen beheizten Tunnel mit einer Verweilzeit von 17 Minuten geschickt, der eine Atmosphäre von 1,1 Vol.-% Ammoniak und 350 mbar Wasserdampf enthielt. Am Ende dieses Tunnels wurde das endgültige Aerogelmaterial durch ein Lastverriegelungssystem rekuperiert.

Die Analyse des Materials ergab eine mittlere Partikelgröße von 3 mm.

### 2. Herstellung der Mischungen:

Die Herstellung der Mischungen erfolgt nach DIN EN 196-1; Punkt 6.2.

Die Bestandteile der hergestellten Mischungen sind in Tabelle 1 gelistet, wobei die jeweiligen Bestandteile folgende Bedeutung haben:
Milke^{®} Premium CEM I 52,5R: Portlandzement, Fa. Heidelbergcement
CAC Istra 40: Aluminatzement, Fa. Calucem
Aerogel gemäß Beispiel 1, Partikelgröße 3 mm,
SilCell^{®} 42 BC: expandierter Perlit, hydrophil, Partikelgröße 45µm, Fa. Silbrico Corporation
SilCell^{®} 42/18: expandierter Perlit, hydrophob, Partikelgröße 45µm, Fa. Silbrico Corporation
ADT AeroBall^{®} Granluat: expandierter Perlit, hydrophob, Partikelgröße 0,6 mm, Fa.
ADT Aero Dämm Technik GmbH
JIOS AeroVa^{®} Powder: Aerogel, hydrophob, Partikelgröße 40-50µm
Aeroperl^{®} 6808: hydrophob, Partikelgröße 25-50 µm, Fa. Evonik Operations GmbH Tylose MH 15003 P6: Celluloseether, Methylhydroxyethylcellulose, Fa. Shin Etsu
Elotex^{®} MP 2100: Dispersionspulver, Vinylacetat-Ethylen-Copolymer, Fa. Celanese
Hostapur^{®} OSB: Luftporenbildner, Napthalinsulfonat-Natriumsalz, Fa. Clariant
Na-stearat/-oleat: Hydrophobierungsmittel

**Tabelle 1: Beispiele Mischungszusammensetzungen**

| **Alle Angaben in Gew.-%** | **Beispiel 1** | **Beispiel 2** | **Vergleich 1** | **Vergleich 2** | **Vergleich 3** | **Vergleich 4** | **Vergleich 5** | **Vergleich 6** | **Vergleich 7** | **Vergleich 8** | **Vergleich 9** |
|---|---|---|---|---|---|---|---|---|---|---|---|
| Milke^{®} Premium CEM I 52,5R | 32,66 | 32,66 | 32,66 | 32,66 | 32,66 | 32,66 | 32,66 | 32,66 | 32,66 | 32,66 | 32,66 |
| CAC Istra 40 | 2 | 2 | 2 | 2 | 2 | 2 | 2 | 2 | 2 | 2 | 2 |
| Kalkhydrat | 3 | 3 | 3 | 3 | 3 | 3 | 3 | 3 | 3 | 3 | 3 |
| Kalksteinmehl | 8 | 8 | 8 | 8 | 8 | 8 | 8 | 8 | 8 | 8 | 8 |
| Aerogel gemäß Beispiel 1 | 32,66 | 32,66 | 32,66 | | | 32,66 | 32,66 | | | | |
| Aerogel gemäß Beispiel 1 | | | | 52,9 | | | | | | | |
| SilCell^{®} 42 BC | 20,24 | | | | | | | 20,24 | | | |
| SilCell^{®} 42/18 | | 20,24 | | | 52,9 | | | | 20,24 | 32,66 | |
| ADT AeroBall^{®} | | | 20,24 | | | | | 32,66 | 32,66 | | 52,9 |
| JIOS AeroVa^{®}Powder | | | | | | 20,24 | | | | 20,24 | |
| Aeroperl | | | | | | | 20,24 | | | | |
| Tylose MH 15003 P6 | 0,2 | 0,2 | 0,2 | 0,2 | 0,2 | 0,2 | 0,2 | 0,2 | 0,2 | 0,2 | 0,2 |
| Elotex^{®} MP 2100 | 1 | 1 | 1 | 1 | 1 | 1 | 1 | 1 | 1 | 1 | 1 |
| Hostapur^{®} OSB | 0,04 | 0,04 | 0,04 | 0,04 | 0,04 | 0,04 | 0,04 | 0,04 | 0,04 | 0,04 | 0,04 |
| Na-stearat/-oleat | 0,2 | 0,2 | 0,2 | 0,2 | 0,2 | 0,2 | 0,2 | 0,2 | 0,2 | 0,2 | 0,2 |

### 3. Herstellung der Dämmputze:

Die Herstellung der Dämmputze erfolgt gemäß EN 196-1; Teil 6.2.

Tabelle 2 gibt einen Überblick über die Prozessierbarkeit der Mischungen bei der Herstellung der Dämmputze sowie die Materialeigenschaften der erhaltenen Dämmputze:

**Tabelle 2: Prozessierbarkeit und Materialeigenschaften**

| **Beispiel** | **Prozessierbarkeit** | WLF (10°C) [mW/m*K] | WLF (23°C) [mW/m*K] | WLF (50°C) [mW/m*K] |
|---|---|---|---|---|
| **1** | Problemlos | 37 | 39 | 44 |
| **2** | Problemlos | 38 | 40 | 43 |
| **Vergleich 1** | Problemlos | 45 | 48 | 64 |
| **Vergleich 2** | nur über den Umweg einer Schlämme, d.h. zunächst Mischen aller Bestandteile außer Aerogel und portionsweise Zugabe des Aerogels | 36 | 39 | 42 |
| **Vergleich 3** | nicht möglich | na | na | na |
| **Vergleich 4** | nicht möglich | na | na | na |
| **Vergleich 5** | nicht möglich | na | na | na |
| **Vergleich 6** | Problemlos | 77 | 79 | 90 |
| **Vergleich 7** | Problemlos | 67 | 69 | 76 |
| **Vergleich 8** | nicht möglich | na | na | na |
| **Vergleich 9** | Problemlos | 54 | 46 | 61 |

| | | | | |
|---|---|---|---|---|
| WLF: Wärmeleitfähigkeit | | | | |

Die erfindungsgemäßen Beispiele 1 und 2 bestätigen die erfindungsgemäße Kombination aus guter Prozessierbarkeit und guten Wärmeleitfähigkeiten für die erhaltenen Dämmputze. Mischungen aus Aerogelen anderer Partikelgrößen (Vergleich 3 und 7) lassen sich nicht prozessieren, ebenso Mischungen ohne Anwesenheit von Aerogelen (Vergleich 2). Die Kombination aus verschiedenen expandierten Perliten mit unterschiedlichen Partikelgrößen (Vergleich 1, 5 und 6) lassen sich zwar problemlos verarbeiten, die erhaltenen Dämmputze zeigen aber schlechtere Wärmedämmeigenschaften.

## Patentansprüche

1. Mischungen zur Herstellung von Dämmputzen oder Wärmedämmmaterialien umfassend Aerogel mit einer Partikelgröße von 0,1 - 7,0 mm, mindestens einen Leichtzuschlag mit einer Partikelgröße von 5 bis 500 µm und mindestens ein zementbasiertes Bindemittel.

2. Mischungen gemäß Anspruch 1, **dadurch gekennzeichnet, dass** das Aerogel ein hydrophobiertes Siliciumdioxid-Aerogel ist.

3. Mischungen gemäß Anspruch 1 oder 2, **dadurch gekennzeichnet, dass** der Leichtzuschlag ein expandierter Perlit ist.

4. Mischungen gemäß einem oder mehreren der Ansprüche 1 bis 3, **dadurch gekennzeichnet, dass** die expandierten Perlite unbeschichtet oder hydrophobiert sind.

5. Mischungen gemäß einem oder mehreren der Ansprüche 1 bis 4, **dadurch gekennzeichnet, dass** die Mischung folgende Zusammensetzung aufweist, wobei die Summe der Anteile 100 Gew.-% ergeben muss:
| | |
|---|---|
| Aerogel: | 20 - 40 Gew.-% |
| Expandierter Perlit: | 10 - 30 Gew.-% |
| Zementbasiertes Bindemittel: | 15 - 35 Gew.-% |
| Kalkbasiertes Bindemittel: | 5 - 15 Gew.-% |
| Additive: | 0,5 - 2 Gew.-%. |

6. Verwendung einer Mischung gemäß einem oder mehreren der Ansprüche 1 bis 5 zur Herstellung eines Dämmputzes oder von Wärmedämmmaterialien.

7. Verwendung gemäß Anspruch 6, **dadurch gekennzeichnet, dass** es sich bei den Wärmedämmmaterialien um Dämmplatten oder Betonthermowände handelt.

8. Dämmputz oder Wärmedämmmaterialien zur Wärmedämmung von Bauwerken bzw. Gebäuden, erhalten aus einer Mischung gemäß einem oder mehreren der Ansprüche 1 bis 5.

9. Mehrschichtiges Dämmputzsystem, welches mindestens eine Dämmputzschicht, bestehend aus einem aus der Mischung gemäß einem oder mehreren der Ansprüche 1 bis 5 enthaltenden Dämmputz und einer Oberflächenbeschichtung, wobei die Oberflächenbeschichtung auf der von der mit dem Dämmputz versehenen Fläche abgewandten Seite, insbesondere einer Gebäudewand, angeordnet ist.

10. Wärmedämmverbundsystem enthaltend Wärmedämmmaterialien gemäß Anspruch 8.
